# EUROPEAN PATENT SPECIFICATION

(11) **EP 0 678 420 B1**
(45) Date of publication and mention of the grant of the patent: **09.09.1998**
(21) Application number: 95105832.0
(22) Date of filing: 19.04.1995
(51) Int. Cl.: B60R 1/00, B60R 1/06

(54) **Electrically powered foldable rearview mirror for automobiles including a sealing structure for a driving unit**
Elektrischer, einklappbarer Rückspiegel für Kraftfahrzeuge mit Dichtungsvorrichtung für die Antriebseinheit
Rétroviseur pour véhicules à rabattement motorisé électriquement comportant un dispositif d'étanchéité pour l'unité d'entraînement

(30) Priority: 19.04.1994 JP 103238/94
(43) Date of publication of application: 25.10.1995
(73) Proprietor: MURAKAMI KAIMEIDO CO., LTD, Shizuoka-Ken, 422 (JP)
(72) Inventor: Mochizuki, Toshihiro, Fujieda-shi, Shizuoka-ken, 426 (JP)
(74) Representative: Riederer Freiherr von Paar zu Schönau, Anton

(56) References cited:
- EP-A- 0 331 744
- EP-A- 0 587 994
- DE-A- 3 633 010
- DE-A- 3 731 826
- US-A- 4 256 375

## Description

### BACKGROUND OF THE INVENTION

### 1. Field of the Invention:

The present invention relates to an electrically powered foldable rearview mirror for automobiles and, more particularly, to a mirror for automobiles in which a hollow cylindrical shaft is fixed to a mirror base portion, a frame is rotatably mounted on said shaft to support a mirror body, on which frame a containing chamber is formed which is enclosed in a housing comprising a standing wall and a sealing cap and enclosing a driving control unit which comprises a rotor for folding the mirror, a gear train for reduction of a rotation speed generated by the motor and positioning means, whereby the mirror body is rotated to an erected position or a folded position; and particularly relates to such electrically powered foldable rearview mirror for automobiles that include a sealing structure for the driving unit, in which the sealing cap is fitted on the frame to seal the driving unit in such a manner that the unit is prevented from being flooded through the clearance between the sealing cap and the shaft, and include a harness cord for the power supply of the mirror, which harness cord passes through the hollow shaft and through a harness penetration hole in the housing of the chamber. The harness cord is wired upwardly from the mirror base through the shaft and is led out of the harness cord ejecting hole.

### 2. Description of the Relevant Art:

In these years some of automobiles having various types of functions are proposed so as to progress an added value to the rearview mirrors. For example there are electrically powered foldable rearview mirrors in which a mirror body can be folded and maintained in the folded condition when the automobile is to be parked, a heating device or a ultrasonic oscillating device is provided therewith for removing water drops sticking on the mirror surface, or an actuator for adjusting the reflection angle of the mirror surface or an automtic anti-glare device or the like for decresing a glare light from a head lamp of the following vehicle are integrated.

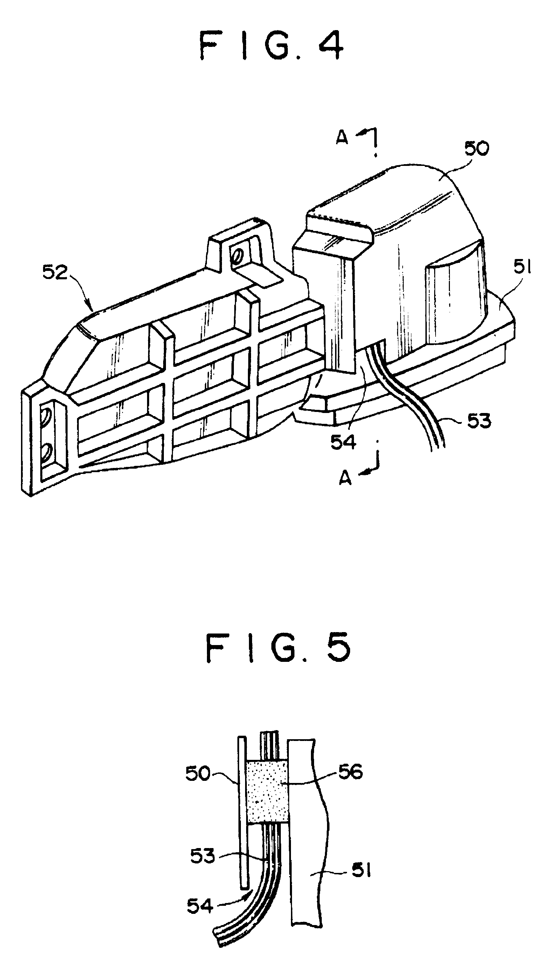

In a conventional electrically powered foldable rearview mirror, as shown in FIG. 4, a sealing cap 50 is attached to fit on a frame 51 so that an inside electrically powered foldable device (so called hereinbelow including an electronic device) adapted to protect from a mechanical shock is protected from flooding of water or the like.

Such device is a driving unit which is covered at an upper surface thereof with the sealing cap 50 and which comprises an electric drive motor for folding the mirror and a reduction gear train which is connected to an output axis of the motor. The driving unit is attached to a root portion of the frame 51 so that the mirror body is fixed to a bracket 52 of the frame 51 and rotates around the cylindrical shaft which is erected on a mirror base. A driving current and a controlling signal for the motor or the like are supplied via a harness cord 53. The harness cord 53 extends from the automobile body side through the shaft inside diameter via a small access 54 provided between the sealing cap 50 and the frame 51 toward the outside of the sealing cap 50. Thereafter the harness cord is connected to said motor, to the heater device, to the ultrasonic oscillator, to the mirror reflection angle adjusting actuator or to the automatic anti-glare device (not shown) via one of various kinds of connectors.

In view of a necessity for the replacement of the harness cord 53 at the time of wiring for the mirror assembly or at the time of the repair of the assembly, or for facility of the wiring works, the access 54 size is set to be larger than a bundle of a plurality of harness cords 53. As shown in FIG. 5 which is a partially cross-sectional view taken along line A - A of FIG. 4, the access 54 which is provided between the sealing cap 50 and the frame 51 is closed by attaching a rubber or elastomer made resilient projection 56 or a packing material such as a grommet which are attached to the sealing cap 50 inside to be water proof or to be protected from the dust.

Conventionally, however, there has been a problem that water seeps into the interior of the sealing cap 50 due to the capillarity phenomenon through a slight small space formed between said sealing cap 50 and the frame 51, and especially for automobiles being washed by a high pressure washing, it has caused disadvantages that the washing water can penetrate thereinto.

Furthermore there is a fear that harness cords are led to the wrong access other than the determined access at the time of wiring of assemblies, or of the repair. The synthetic resin made sealing cap 50 is easily deformed and there has been a problem of causing water intruding through said deformed parts since an even sealing can not be achieved in case of harness cords biting or due to the recovering force of the packing materials 56 which are packed therein. Thus there has been a problem that the complete water proof effect could not be achieved by conventional mirrors, and a water flood has been even more easily caused if the cap was not filled with such resilient projection or packing materials.

From DE-A-37 31 826, an electrically powered foldable rearview mirror is known wherein the driving unit is enclosed in a sealed chamber surrounding the shaft, and the harness cord passes through the hollow shaft and, according to some of the described embodiments, exits on top the sealed chamber and passes on to the electric motors of the driving unit. The harness cord leaves the chamber through a penetration hole in the housing in a sealed manner by sealing it with a rubber cap member or the like. The consequence therefrom is that at one hand, heat generated e.g. by the electric motors accumulates, or at the other hand humidity which leads to dewing wetness stays within the sealed housing without a possibility of an escape.

A similiar construction is shown in DE-A-36 33 010 describing a rearview mirror wherein the harness cord leaving the housing of the chamber at the top thereof is sealed by a rubber sleeve.

### SUMMARY OF THE INVENTION

It is an object of the present invention to provide an electrically powered foldable rearview mirror capable of preventing the driving unit from water flooding through a clearance of the sealing cap and the frame or base but also preventing it from a heat or dew accumulation, and to provide a rearview mirror improved in the facility of wiring harness cords thus eliminating the possibility of biting them between the sealing cap and the frame or base.

According to the present invention, the electrically powered foldable rearview mirror for an automobile, according to the initially defined design, is characterized in that the harness cord penetration hole forms a faucet joint and communicates with and grips said upper end of the cylindrical shaft so that the sealing cap around said penetration hole is arranged to provide a slight labyrinth-shaped clearance between the sealing cap and said upper end of the shaft, the harness cord leaving the shaft via the penetration hole being led to a connector which itself is coupled to the motor and which in a sealing manner is inserted into a connector hole also disposed in the upper portion of the sealing cap.

The harness cord penetration hole with the faucet joint and the hole for receiving the connector of supplying the motor from an electric power source are respectively disposed on the upper portion of the sealing cap, i. e. are formed in the wall thereof, and said harness cord penetration hole is formed to communicate with the cylindrical shaft but has a slight clearance between the sealing cap and the shaft.

Preferably, the harness cord penetration hole is disposed in the sealing cap to form the faucet joint so that a groove capable of receiving the shaft upper end portion is defined by the inner and outer cylindrical portions, into which groove is inserted the shaft upper end portion, the rim which is disposed on the upper end of the inner cylindrical portion and the outer cylindrical portion which is disposed extending downwardly from the outer periphery of the rim, respectively, being integral with the sealing cap in such a manner as to have an air permeable clearance between the groove and the shaft.

The connector for supplying the motor electric power source preferably is pressed into the connector receiving hole via a sealed sleeve and is attached to one end of the harness cord.

Advantageously in the above described embodiment, it is possible to engage and fix the sealing cap uniformly to the outer surface of the chamber which is formed on the frame, without the sealing cap being deformed. After assembling the frame in the mirror body, the harness cords can be easily and sure wired from the mirror base to the cylindrical shaft. The motor power supplying connector is so pressed in the connector receiving hole via a sealing sleeve enabling easily sealing of the motor and harness cords that the harness cords are prevented from biting or quenching between the sealing cap and the frame.

Furthermore the harness cord penetration hole is disposed in the sealing cap to form the faucet joint so that the groove is capable of receiving the shaft upper end and said groove is surrounded by the inner and outer cylindrical portions which are clapped over the shaft upper end portion, the rim which is disposed on the upper end of the inner cylindrical portion and the outer cylindrical portion which is disposed extending downwardly the outside periphery of the rim, being respectively integral with the sealing cap. Therefore at the time of washing the automobile and of water flowing from the upper surface of the mirror into said harness cord penetration hole, water will not intrude into the sealing cap but flow down through the shaft. In the operation of fitting the sealing cap to fit over the shaft upper end, an air pressure difference in and out of the sealing cap is prevented by the air permeable clearance which is formed between the shaft and the walls of the groove.

The above and further objects, details and advantages of the present invention will become apparent from the following detailed description of preferred embodiments thereof, when read in conjunction with the accompanying drawings.

### BRIEF DESCRIPTION OF THE DRAWINGS

- FIG. 1: is a fragmentary schematic front elevational view, partly cut away, of a driving unit of an electrically powered foldable rearview mirror according to one embodiment of the present invention;
- FIG. 2: is a perspective view showing a sealing cap used in the rearview mirror according to the present invention;
- FIG. 3: is an enlarged cross-sectional view, partly cut away, showing a harness cord ejecting hole and the condition of fitting the sealing cap over a shaft upper end portion of the rearview mirror according to the present invention;
- FIG. 4: is a perspective view showing a frame, a sealing cap and a harness cord of conventional rearview mirrors; and
- FIG. 5: is a cross-sectional view, partly cut away, taken along line A-A of FIG. 4.

### DETAILED DESCRIPTION OF THE PREFERRED EMBODIMENTS

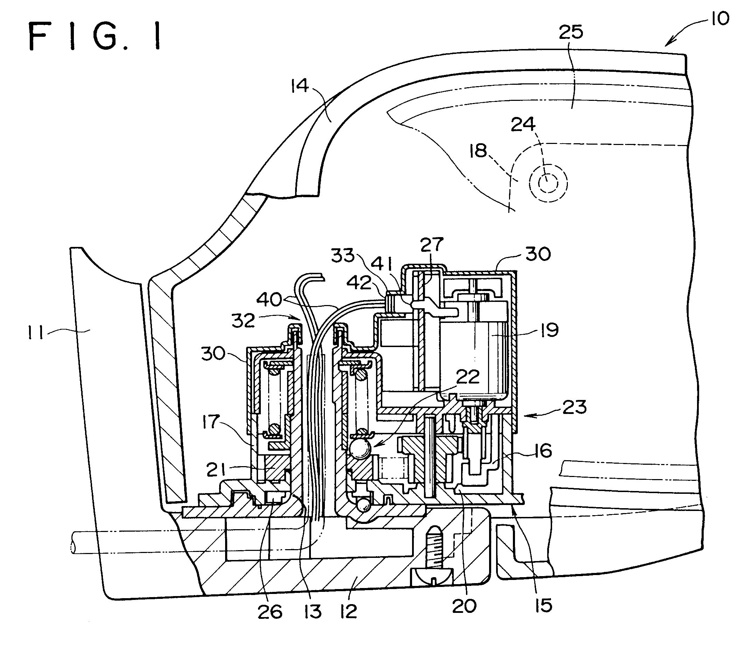

As shown in FIG. 1, in an electrically powered foldable rearview mirror 10 according to the present invention, a mirror base 11 comprises an extending (projecting) portion 12 on which a cylindrical shaft 13 is erected, and a mirror body 14 is rotatably supported on said shaft 13. A frame 15 is fixed to the mirror body 14 and a chamber 16 is formed at the base portion of the frame 15. The frame 15 comprises a standing wall 17, part of the housing of chamber 16, and further comprises a bracket 18. The chamber 16 is provided with a hole in the base portion of the frame 15 through which the shaft 13 penetrates and the bracket 18 erects from one end of the base portion of the frame 15. The chamber 16 houses an electric drive means (motor) 19, a speed reduction mechanism 20 comprising a worm to reduce the rotation speed generated by the motor and twin gears or the like (not shown). The end gear of the speed reduction mechanism is engaged with a receiving gear 21 which is arranged on the shaft 13. The receiving gear 21 is coupled to the shaft 13 via a clutch means 22 but is also to be free from the shaft 13 at the time of an enforced rotation of the mirror body. The electric driving means 19 and the speed reduction mechanism 20 constitute a driving unit 23.

The bracket 18 is fixed to the mirror body inner wall via several screws 24 and a mirror element 25 is attached to the front surface of the bracket 18. A positioning means 26 is mounted between the frame 15 and the shaft 13 for halting and holding the mirror body 14 at the erected position and at the folded position. Alternatively, in a manner not shown in drawings, the receiving gear 21 may be engaged with the end gear of the driving unit 23 which is composed of the electric driving means 19 and the speed reduction mechanism 20, and the positioning means 26 may be disposed between the receiving gear 21 and the frame 15 for halting the mirror body 14 at the erected position and the folded position. The motor of the driving means 19 is connected to a motor control substrate 27.

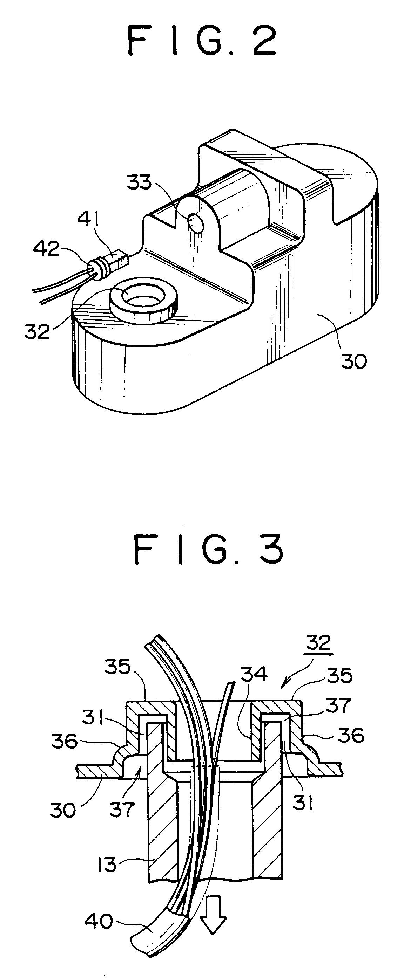

A sealing cap 30 is disposed to cover the driving unit 23. The bottom portion of said cap 30 is engaged to adhere to the outer surface of the standing wall 17 of the chamber 16, and on the upper portion of the sealing cap 30, as shown in FIG. 2 and FIG. 3, a harness cord ejecting or penetration hole 32 with a faucet joint and a hole 33 through which a connection from the motor to a electric power source penetrates are respectively provided and the harness cord penetration hole 32 communicates with the shaft 13 but has a slight clearance 31 therebetween.

The harness cord penetration hole 32 is disposed in the sealing cap 30 to form a faucet joint leaving the air permeable clearance 31 to the shaft 13; it is constituted by an inner cylindrical portion 34 inserted into the inside of the shaft upper end portion, a rim 35 positioned above said shaft upper end and integral with the inner cylindrical portion 34, and by an outer cylindrical portion 36 extended downwardly from the whole outer periphery of the rim 35, respectively integrally uniformed with said sealing cap 30. A groove 37 is defined between the inner and the outer cylindrical portions 34 and 36, and the air permeable clearance 31 is formed between the shaft 13 and the walls of the groove 37.

A harness cord 40 is wired in through the extending portion 12 of the mirror base and through the cylindrical shaft 13 and is led out through the harness cord penetration hole 32 toward the inside of the mirror body. A connector 41 for supplying the motor with electric power is attached at one end of the harness cord and is pressed into the connector inserting hole 33 via a sealed sleeve 42. The connector 41 is contained in the sealing cap 30 and is connected to the motor 19 via the motor control substrate 27 in a manner as shown in FIG. 1.

The harness cord penetration hole 32 in a condition of fitting the sealing cap 30 over the cylindrical shaft 13 is shown in FIG. 3, and the certain sized clearance 31 is provided between the walls of the groove 37 and the shaft upper portion to permit air to flow therethrough. Consequently the sealing cap 30 is prevented from absorbing water due to an air pressure difference, as there is no air pressure difference between in and out of the cap, and further more, if accidentally the sealing cap inside is heated by a heat generation of the motor or the like, a trouble of an over heating or the like of the unit can be prevented because of the air permeability of said clearance.

As also clearly shown in FIG. 3, since the harness cord penetration hole 32 is to be engaged over the shaft upper end, in the condition of bad weather or at the time of washing the car, water which floods downwardly from the upper side of the mirror body flows downwardly via the shaft 13 and it is possible to protect the electrical driving unit of the sealing cap inside from an external rain flood.

In accordance with the embodiment of the present invention, it does not cause any deformation of the sealing cap, due to conventional water proof material such as sponge or grommet, to enable a simple and a sure engagement of the sealing cap with the frame periphery and to provide a facile wiring of the harness cord without the fear of quenching the wired harness cord between the sealing cap and the frame. Although there has been described what is at present considered to be the preferred embodiment of the present invention, it will be understood that the invention may be embodied in other specific forms without departing from the essential characteristics thereof. The present embodiments are therefore to be considered in all aspects as illustrative, and not restrictive. The scope of the invention is indicated by the appended claims rather than by the foregoing description.

## Claims

1. An electrically powered foldable rearview mirror for automobiles comprising:
- a mirror base (11) attached to an automobile body and having an extending portion (12);
- a hollow cylindrical shaft (13) erected on the extending portion (12) and having an upper end;
- a frame (15) mounted to be rotatable around the cylindrical shaft (13) and comprising a frame root portion, a containing chamber (16) being formed on the frame (15) and being enclosed in a housing comprising a standing wall (17) and a sealing cap (30) engaging the outside of the standing wall (17);
- a mirror body (14) supported on the frame (15);
- a driving unit (23) contained in a water-protected manner in the chamber (16) and comprising an electrically powered folding motor (19) which is disposed on the frame root portion and a speed reduction mechanism (20) which is connected to the motor output axis;
- a harness cord (40) passing through the cylindrical shaft (13) and through a penetration hole (32) in the upper portion of the sealing cap (30) and further leading to the motor (19);
- a positioning means (26) arranged to halt and hold the mirror body (14) at the erected position and at the folded position;
characterized in that the harness cord penetration hole (32) forms a faucet joint and communicates with and grips said upper end of the cylindrical shaft (13) so that the sealing cap (30) around said penetration hole (32) is arranged to provide a slight labyrinth-shaped clearance (31) between the sealing cap (30) and said upper end of the shaft (13), the harness cord (40) leaving the shaft (13) via the penetration hole (32) being led to a connector (41) which itself is coupled to the motor (19) and which in a sealing manner is inserted into a connector hole (33) also disposed in the upper portion of the sealing cap (30).

2. An electrically powered foldable rearview mirror for automobiles according to claim 1, characterized in that the positioning means (26) are disposed between the frame (15) and the shaft (13).

3. An electrically powered foldable rearview mirror for automobiles according to claim 1 or 2, characterized in that said harness cord penetration hole (32) in the sealing cap (30) forms the faucet joint so that a groove (37) capable of receiving the upper end portion of the shaft (13) surrounds an inner cylindrical portion (34) which is inserted into the inside of the shaft upper end portion, a rim (35) which is disposed at the upper end of the inner cylindrical portion (34) and an outer cylindrical portion (36) which is disposed extending downwardly from the outer periphery of the rim (35), being respectively integral with the sealing cap (30) in a manner as to have the clearance (31) between the groove (37) and the shaft (13) so as to be air permeable.

4. An electrically powered foldable rearview mirror for automobiles according to any of claims 1 to 3, characterized in that the connector (41) for supplying the motor (19) with electric power, attached to an end of the harness cord, is pressed into the connector receiving hole (33) upon interposition of a sealing sleeve (42).

## Patentansprüche

1. Elektrisch angetriebener einklappbarer Rückblickspiegel für Kraftfahrzeuge, mit:
- einer am Kraftfahrzeugkörper befestigten Spiegelbasis (11), die einen abstehenden Teil (12) aufweist;
- einem hohlen zylindrischen Achsbolzen (13), der auf dem abstehenden Teil (12) nach oben absteht und ein oberes Ende aufweist;
- einem Rahmen (15), der um den zylindrischen Achsbolzen (13) drehbar montiert ist und einen Rahmenfußteil umfaßt, und auf dem eine Gehäusekammer (16) gebildet ist, deren sie einschließendes Gehäuse eine stehende Wand (17) und eine an der Außenseite der stehenden Wand (17) angreifende Verschlußkappe (30) umfaßt;
- einem am Rahmen (15) sitzenden Spiegelkörper (14);
- einer in wassergeschützter Weise in der Kammer (16) befindlichen Antriebseinheit (23), die einen elektrisch angetriebenen Motor (19) für das Einklappen, der am Rahmenfußteil sitzt, und einen Drehzahluntersetzungsmechanismus (20), der mit der Motor-Abtriebswelle verbunden ist, umfaßt;
- einem Zuleitungskabel (40), das durch den zylindrischen Achsbolzen (13) und durch ein Durchführungsloch (32) im oberen Teil der Verschlußkappe (30) verläuft und weiterhin zum Motor (19) führt;
- einer Positioniereinrichtung (26), die dazu angeordnet ist, den Spiegelkörper (14) in der ausgestellten Position und in der eingeklappten Position anzuhalten und festzuhalten;
dadurch gekennzeichnet, daß das Kabeldurchführungsloch (32) eine Muffenrohrverbindung bildet, mit dem oberen Ende des zylindrischen Achsbolzens (13) kommuniziert und dieses so umgreift, daß die Verschlußkappe (30) um das Durchführungsloch (32) so angeordnet ist, daß ein geringer labyrinthförmiger Spalt (31) zwischen der Verschlußkappe (30) und dem oberen Ende des Achsbolzens (13) gebildet ist, und daß das Zuleitungskabel (40), das den Achsbolzen (13) über das Durchführungsloch (32) verläßt, zu einem Verbinder (41) verläuft, der seinerseits mit dem Motor (19) verbunden ist und der in dichter Weise in ein Verbinderloch (33) eingesetzt ist, das sich ebenfalls im oberen Teil der Verschlußkappe (30) befindet.

2. Elektrisch angetriebener einklappbarer Rückblickspiegel für Kraftfahrzeuge nach Anspruch 1, dadurch gekennzeichnet, daß die Positioniereinrichtung (26) zwischen dem Rahmen (15) und dem Achsbolzen (13) angeordnet ist.

3. Elektrisch angetriebener einklappbarer Rückblickspiegel für Kraftfahrzeuge nach Anspruch 1 oder 2, dadurch gekennzeichnet, daß das Kabeldurchführungsloch (32) in der Verschlußkappe (30) die Muffenrohrverbindung so bildet, daß eine Nut (37), die den oberen Endteil des Achsbolzens (13) aufnehmen kann, einen inneren zylindrischen Teil (34) umgibt, der in den Innenraum des oberen Endteils des Achsbolzens eingesteckt ist, und daß jeweils integral mit der Verschlußkappe (30) ein Rand (35), der am oberen Ende des inneren zylindrischen Teils (34) angeordnet ist, und ein äußerer zylindrischer Teil (36), der vom Außenumfang des Rands (15) nach unten abstehend angeordnet ist, in einer Weise ausgebildet sind, daß der Spalt (31) zwischen der Nut (37) und dem Achsbolzen (13) in luftdurchlässiger Weise entsteht.

4. Elektrisch angetriebener einklappbarer Rückblickspiegel für Kraftfahrzeuge nach einem der Ansprüche 1 bis 3, dadurch gekennzeichnet, daß der Verbinder (41) zum Speisen des Motors (19) mit elektrischem Strom, der an einem Ende des Zuleitungskabels befestigt ist, in das den Verbinder aufnehmende Loch (33) unter Zwischenlage einer Dichthülse (42) eingepreßt ist.

## Revendications

1. Rétroviseur rabattable alimenté électriquement, pour automobiles, comportant:
- une base de miroir (11) fixée sur une carrosserie d'automobile et ayant une partie de prolongement (12);
- un arbre cylindrique creux (13) dressé sur la partie de prolongement (12) et ayant une extrémité supérieure;
- un châssis (15) monté pour être rotatif autour de l'arbre cylindrique (13) et comportant une partie de racine de châssis, une chambre de réception (16) étant formée sur le' châssis (15) et étant enfermée dans un boîtier comportant une paroi verticale (17) et un capuchon d'étanchéité (30) venant en prise sur l'extérieur de la paroi verticale (17);
- un corps de miroir (14) supporté sur le châssis (15);
- une unité d'entraînement (23) reçue d'une manière protégée contre l'eau dans la chambre (16) et comportant un moteur de rabattement alimenté électriquement (19) qui est agencé sur la partie de racine de châssis et un mécanisme de réduction de vitesse (20) qui est relié à l'axe de sortie du moteur;
- un cordon de câbles (40) passant à travers l'arbre cylindrique (13) et à travers un trou de pénétration (32) situé dans la partie supérieure du capuchon d'étanchéité (30) et aboutissant de plus au moteur (19);
- des moyens de positionnement (26) agencés pour arrêter et maintenir le corps de miroir (14) au niveau de la position dressée et au niveau de la position rabattue;
caractérisé en ce que le trou (32) de pénétration du cordon de câbles forme un assemblage à emboîtement et communique avec ladite extrémité supérieure de l'arbre cylindrique (13) et la saisit, de sorte que le capuchon d'étanchéité (30) situé autour dudit trou de pénétration (32) est agencé pour fournir un léger jeu en forme de labyrinthe (31) entre le capuchon d'étanchéité (30) et ladite extrémité supérieure de l'arbre (13), le cordon de câbles (40) quittant l'arbre (13) via le trou de pénétration (32) étant entraîné vers un connecteur (41) qui lui-même est relié au moteur (19) et qui, d'une manière étanche, est inséré dans un trou de connecteur (33) agencé aussi dans la partie supérieure du capuchon d'étanchéité (30).

2. Rétroviseur rabattable alimenté électriquement, pour automobiles, selon la revendication 1, caractérisé en ce que les moyens de positionnement (26) sont agencés entre le châssis (15) et l'arbre (13).

3. Rétroviseur rabattable alimenté électriquement, pour automobiles, selon la revendication 1 ou 2, caractérisé en ce que ledit trou (32) de pénétration de cordon de câbles du capuchon d'étanchéité (30) forme l'assemblage à emboîtement de telle sorte qu'une gorge (37) capable de recevoir la partie d'extrémité supérieure de l'arbre (13) entoure une partie cylindrique intérieure (34) qui est insérée à l'intérieur de la partie d'extrémité supérieure d'arbre, une nervure (35) qui est agencée au niveau de l'extrémité supérieure de la partie cylindrique intérieure (34) et une partie cylindrique extérieure (36) qui est agencée s'étendant vers le bas à partir de la périphérie extérieure de la nervure (35), étant formées venues de matière respectivement avec le capuchon d'étanchéité (30) de manière à avoir le jeu (31) formé entre la gorge (37) et l'arbre (13) de manière à être perméable à l'air.

4. Rétroviseur rabattable alimenté électriquement, pour automobiles, selon l'une quelconque des revendications 1 à 3, caractérisé en ce que le connecteur (41) pour alimenter le moteur (19) en courant électrique, relié à une extrémité du cordon de câbles, est poussé dans le trou de réception de connecteur (33) lors de l'interposition d'un manchon d'étanchéité (42).
